# EUROPÄISCHE PATENTSCHRIFT

(11) **EP 0 874 723 B1**
(45) Veröffentlichungstag und Bekanntmachung des Hinweises auf die Patenterteilung: **10.04.2002**
(21) Anmeldenummer: 97900602.0
(22) Anmeldetag: 14.01.1997
(51) Int. Cl.: B29C 45/53

(54) **SPRITZGUSSVORRICHTUNG**
INJECTION MOULDING DEVICE
DISPOSITIF DE MOULAGE PAR INJECTION

(30) Priorität: 17.01.1996 DE 19601556
(43) Veröffentlichungstag der Anmeldung: 04.11.1998
(73) Patentinhaber: Steinl, Alfred, 84032 Altdorf (DE)
(72) Erfinder: Steinl, Alfred, 84032 Altdorf (DE)
(74) Vertreter: VOSSIUS & PARTNER
(86) Internationale Anmeldenummer: EP9700141
(87) Internationale Veröffentlichungsnummer: WO9726125

(56) Entgegenhaltungen:
- EP-A- 0 010 887
- EP-A- 0 287 001
- EP-A- 0 375 583
- DE-A- 4 304 489
- DE-U- 9 110 240
- FR-A- 2 242 223
- US-A- 3 918 870
- US-A- 4 286 941

## Beschreibung

Die Erfindung betrifft eine Spritzgußvorrichtung insbesondere für Gummi, Kautschuk oder ähnliche Werkstoffe, wie Elastomere, Duroplaste und vernetzbare Polymere.

Die EP 0 287 001 Al betrifft eine Vorrichtung zum Spritzgießen von Werkstoffen mit einer Plastifiziereinheit, die einen Extruderausgang hat, und mit einer Injektionseinheit, die einen Spritzkolben sowie einen Spritzkanal mit einer Abgabeöffnung aufweist. Zum Füllen der Injektionseinheit wird der Extruderausgang der Plastifiziereinheit mit der Abgabeöffnung des Spritzkolbens verbunden. Für den Einspritzvorgang wird der Extruderausgang von der Abgabeöffnung getrennt und der Spritzkanal mit einem Formwerkzeug verbunden.

Die DE 91 10 240 U1 beschreibt eine Spritzgußvorrichtung, bei der eine Plastifiziereinheit fest mit einem Spritzkolben verbunden ist, durch den hindurch ein in den Spritzzylinder führender Füllkanal verläuft. Das vom Spritzzylinder wegweisende Ende ist mit einem Extruderausgang der Plastifiziereinheit verbunden. Die Mündung des Füllkanals befindet sich an der Spitze des kegelförmig ausgebildeten freien Endes des Spritzkolbens. Die Bodenfläche des Spritzzylinders wird von einem Einsatz gebildet und ist entsprechend der Form des freien Endes des Spritzkolbens kegelförmig, wobei eine Abgabeöffnung im Einsatz mit der Mündung des Füllkanals im Spritzkolben ausgerichtet ist. Zum Befüllen der Injektionseinheit wird die Abgabeöffnung mit einem Sperrschieber verschlossen und Werkstoff von der Plastifiziereinheit über den Extruderausgang und den Füllkanal in den Spritzzylinder eingebracht, wobei der Spritzkolben entsprechend verfahren wird. Anschließend wird der Sperrschieber zurückgezogen und die Injektionseinheit mit einem Formwerkzeug gekoppelt. Daraufhin wird der Spritzkoiben in den Spritzzylinder eingefahren, wobei das Rückschlagventil im Füllkanal in die geschlossene Stellung gedrückt wird und der Werkstoff aus dem Spritzzylinder in das Formnest des Werkzeuges gedrückt wird. Wenn der Spritzkolben vollständig in den Spritzzylinder eingefahren ist, steht die Mündung des Füllkanals mit der Abgabeöffnung in Verbindung. Nach einer bestimmten Zeit wird die Injektionseinheit von dem Formwerkzeug getrennt, wobei der anvulkanisierte Teil aus dem Spritzkanal herausgezogen wird.

Die DE-A-4304489 beschreibt eine Spritzgießmaschine, die einen Spritzzylinder und einen darin verfahrbaren Spritzkolben aufweist. Dabei ist der Spritzzylinder über einen im Spritzkolben angeordneten Füllkanal befüllbar und über eine Abgabeöffnung im Spritzzylinder entleerbar.

Der Erfindung liegt die Aufgabe zugrunde, eine Spritzgußvorrichtung bereitzustellen, die in der Handhabung einfach ist. Diese Aufgabe wird gelöst mit den Merkmalen der Patentansprüche.

Eine erfindungsgemäße Spritzgußvorrichtung weist insbesondere eine Injektionseinheit auf, die einen Spritzzylinder und einen darin verfahrbaren Spritzkolben umfaßt. Der Spritzzylinder ist über einen im Spritzkolben angeordneten Füllkanal mit mindestens einer Mündung befüllbar. Über eine Abgabeöffnung im Spritzzylinder ist dieser entleerbar. Die Mündung des Füllkanals ist von der Abgabeöffnung räumlich und thermisch getrennt. Dies hat den Vorteil, daß bei der Kopplung der Injektionseinheit mit einem Formwerkzeug der in dem Füllkanal vorhandene Werkstoff nicht durch eine zu hohe Temperatur beeinträchtigt wird. Insbesondere kann ein Anvulkanisieren des Werkstoffs in der Abgabeöffnung kontrolliert erfolgen. Beim Entkoppeln der Injektionseinheit von dem Formwerkzeug wird der an das Formteil anvulkanisierte Werkstoff aus der Abgabeöffnung mit herausgezogen.

Die Abgabeöffnung ist damit frei von Resten. Es wird insbesondere sicher vermieden, daß teilweise anvulkanisierte Werkstoffreste beim nächsten Spritzvorgang in das Formwerkzeug eingefüllt werden. Die erfindungsgemäße Spritzgußvorrichtung erlaubt damit eine einfachere Handhabung.

Vorzugsweise weist jeweils der Spritzkolben und der Spritzzylinder mindestens eine Dichtfläche auf, die in der eingefahrenen Stellung des Spritzkolbens miteinander in Eingriff kommen. Dies hat den Vorteil, daß durch Einfahren des Spritzkolbens eine Abdichtung der Mündung des Füllkanals zur Abgabeöffnung im Spritzzylinder erreicht wird. Auf diese Weise wird sichergestellt, daß der in dem Füllkanal bis zur Mündung reichende Werkstoff von dem in das Formwerkzeug eingefüllten Werkstoff sicher getrennt ist. Ferner wird mit der nächsten Füllung des Spritzzylinders eine genau dosierte Menge des Werkstoffs bereitgestellt.

Abhängig von dem zu verarbeitendem Werkstoff wird die Temperatur im Bereich des Füllkanals vorzugsweise so gesteuert, daß ein Anvulkanisieren des im Füllkanal vorhandenen Werkstoffs sicher vermieden wird. Bei einer Kopplung der Spritzgußvorrichtung mit einem Spritzwerkzeug kommt es im Bereich der jeweiligen Barührungsstellen zwischen dem Formwerkzeug und dem Spritzzylinder sowie dem Spritzzylinder und dem Spritzkolben zu Wärmeübergängen. In einem Beispiel werden die Temperaturen vorzugsweise so gesteuert, daß das Formwerkzeug eine Temperatur von etwa 180°C, der Spritzzylinder im Bereich der Abgabeöffnung eine Temperatur von etwa 120°C und der Spritzkolben im Bereich des Füllkanals eine Temperatur von etwa 80°C hat. Die Temperatursteuerung erfolgt durch eine jeweils geeignete Erwärmung oder Kühlung unter Berücksichtigung der Wärmeübergangswiderstände sowie der Wärmeleitwerte der Einzelkomponenten.

Erfindungsgemäß wird das freie Ende des Spritzkolbens als eine sich verjüngende Spitze ausgebildet und die Bodenfläche des Spritzzylinders hat eine komplementäre Form. Dabei ragt die vordere Spitze des Spritzkolbens mindestens teilweise in die Abgabeöffnung hinein. Dadurch wird in vorteilhafter Weise erreicht, daß beim Einfahren des Spritzkolbens die im Spritzzylinder vorhandene Füllung vollständig über die Abgabeöffnung ausgegeben wird und besonders bevorzugt, der Werkstoff in der Abgabeöffnung mindestens teilweise ausgestoßen wird.

Weiter ist die Mündung des Füllkanals im verjüngten Bereich des Spritzkolbens im Abstand von der Spitze angeordnet.

In einer vorteilhaften Ausgestaltung der Erfindung ist das freie Ende des Spritzkolbens kegelförmig ausgebildet und die Bodenfläche des Spritzzylinders weist eine komplementäre Kegelform auf, wobei die Abgabeöffnung im Bereich der Spitze angeordnet ist. Gleichzeitig ist die Mündung des Füllkanals in der Mantelfläche des kegelförmigen Endes angeordnet.

Vorzugsweise ist an dem freien Ende des Spritzkolbens ein Einsatz angeordnet. Dieser Einsatz bildet mindestens einen Teil des sich verjüngenden freien Endes des Spritzkolbens. Dies hat den Vorteil, daß der Einsatz aus einem anderen Material als der Spritzkolben herstellbar ist. Weiterhin kann der Einsatz getrennt hergestellt und bearbeitet werden. Vorzugsweise ist der Einsatz aus einem wärmeisolierenden Material hergestellt. Weiter bevorzugt weist der Spritzzylinder im Bodenbereich ein Mundstückeinsatz mit der Abgabeöffnung auf, der vorzugsweise wärmeisolierend ausgeführt ist. Als Material für den Mundstückeinsatz wird vorzugsweise ein Chrom-Nickel-Stahl wie V2A, V4A oder Keramik aus Sinterwerkstoffen verwendet. Dies hat den Vorteil, daß bei einer Kopplung der Injektionseinheit mit dem Formwerkzeug die Wärmeleitung von der Abgabeöffnung zum Füllkanal und insbesondere deren Mündung unterbrochen oder mindestens verringert ist.

Gemäß einer Weiterbildung der Erfindung ist im Spritzkolben eine Extruderschnecke vorzugsweise in axialer Richtung angeordnet. Weiter bevorzugt ist zwischen der Extruderschnecke und dem Füllkanal ein Rückschlagventil angeordnet, das vorzugsweise selbsttätig schließt, wenn der Druck im Spritzzylinder größer als im Bereich der Extruderschnecke ist.

In vorteilhafter Weise ist das Rückschlagventil zwischen dem rückwärtigen Ende des Einsatzes und dem freien Ende der Extruderschnecke angeordnet. Diese Anordnung hat den Vorteil, daß der Füllkanal im Spritzkolben eine geringe Länge hat und im wesentlichen der Länge des Einsatzes entspricht und daß das Rückschlagventil durch Entfernen des Einsatzes einfach zugänglich ist.

Die Erfindung wird nachstehend anhand eines Beispiels und der Zeichnung näher erläutert. Es zeigen:
- Fig. 1: eine bevorzugte Ausführungsform der Erfindung bei der Befüllung der Injektionseinheit,
- Fig. 1a: ein Detail von Fig. 1,
- Fig. 2: die bevorzugte Ausführungsform von Fig. 1 mit gefülltem Formwerkzeug;
- Fig. 2a: ein Detail von Fig. 2,
- Fig. 3: die bevorzugte Ausführungsform von Fig. 1 nach dem Entkoppeln der Injektionseinheit und dem Öffnen des Formwerkzeugs.
- Fig. 3a: ein Detail von Fig. 3.

In den Figuren sind gleiche Teile mit gleichen Bezugszeichen bezeichnet.

Die bevorzugte Ausführungsform einer Spritzgußvorrichtung weist eine Injektionseinheit 1 auf, die im wesentlichen aus einem Spritzzylinder 20 und einem darin verfahrbaren Spritzkolben 10 besteht. Am freien Ende des Spritzkolbens 10 ist ein Einsatz 16 angeordnet. Das freie Ende zusammen mit dem Einsatz ist kegelförmig ausgebildet. In dem Einsatz ist ein Füllkanal 12 mit einer Verzweigung von einem Eingang in drei Ausgänge ausgebildet. Die Mündungen 14 der drei Ausgänge sind von der Spitze beabstandet und sind im Abstand von 120° voneinander entlang des Umfangs der Mantelfläche des Einsatzes verteilt.

Der Spritzzylinder 20 ist im wesentlichen als Hohlzylinder ausgebildet, an dessem freien Ende ein Mundstück 25 angeordnet ist. An dem Mundstück 25 ist ein Mundstückeinsatz 26 angeordnet, und beide haben in Richtung des Zylinderinnenraums eine kegelförmige Fläche, die komplementär zur kegelförmigen Spitze des Spritzkolbens ist. In dem Mundstückeinsatz 26 ist ein Spritzkanal 22 mit einer Abgabeöffnung 24 ausgebildet. Der Mundstückeinsatz 26 ist mit seinem oberen Teil in das Mundstück 25 vorzugsweise durch Schrauben eingesetzt. Hier besteht eine gute wärmeleitende Verbindung zum Mundstück 25. Das Mundstück 25 wird durch Temperierflüssigkeit im Kanalsystem 39 je nach Einstellung, im Temperaturbereich von 70° bis 80°C gehalten. Der untere Bereich des Mundstückeinsatzes 26 ragt frei aus dem Mundstück 25 heraus. Im Bereich des frei herausragenden Teils des Mundstückeinsatzes weist der Spritzkanal 22 einen sich nach außen konisch erweiternden Difusorabschnitt auf.

In einer alternativen Ausführungsform (nicht dargestellt) sind der Hohlzylinder und das Mundstück einstückig ausgebildet. Im übrigen ist der Aufbau gleich der vorstehend beschriebenen Anordnung.

Der Spritzkolben 10 ist innerhalb des Spritzzylinders 20 mit einem Antrieb (nicht dargestellt) zwischen einer zurückgezogenen Stellung und einer eingefahrenen Stellung in der das kegelförmige Ende des Spritzkolbens mit der kegelförmigen Fläche im Mundstück bzw. Mundstückeinsatz in Berührung kommt, verfahrbar.

In dem Spritzkolben 10 ist eine Plastifiziereinheit 3 angeordnet. Die Plastifiziereinheit 3 besteht im wesentlichen aus einem axial im Spritzkolben 10 vorgesehenen Hohlzylinder 32 und einer darin angeordneten Extruderschnecke 30. Im Bereich des rückwärtigen Endes der Extruderschnecke befindet sich ein Extrudereingang 34 und im Bereich des freien Endes ein Extruderausgang 36. Die Extruderschnecke wird von einem Antrieb (nicht dargestellt) angetrieben.

Zwischen dem Extruderausgang 36 und dem rückwärtigen Ende des Einsatzes 16 ist ein Rückschlagventil 40 vorgesehen. Im gezeigten Beispiel besteht das Rückschlagventil aus einer Kugel, die den Extruderausgang verschließt, sobald der Druck im Spritzzylinder den Druck im Extruder überschreitet. In der anderen Richtung ist der Durchgang frei.

Ein Formwerkzeug 5 besteht aus zwei Teilen, die zusammengesetzt ein Formnest 52 bilden. Das Formnest 52 ist über eine Einspritzöffnung 54 befüllbar. In dem oberen Teil des Formwerkzeugs ist eine Ausnehmung 56 vorgesehen, in die die Injektionseinheit 1 eingefahren werden kann.

Weiterhin weist die bevorzugte Ausführungsform einen Verschlußschieber 60 auf, mit dessen Hilfe die Abgabeöffnung 24 des Spritzzylinders 20 verschließbar ist. Der Verschlußschieber umfaßt eine Verschlußplatte 62, die mit Hilfe eines in einem Zylinder 66 verfahrbaren Kolbens 64 im wesentlichen senkrecht zur Achsenrichtung des Spritzkolbens hin und her verfahrbar ist.

Nachfolgend wird die Funktionsweise der erfindungsgemäßen Spritzgußvorrichtung anhand der Zeichnung näher erläutert.

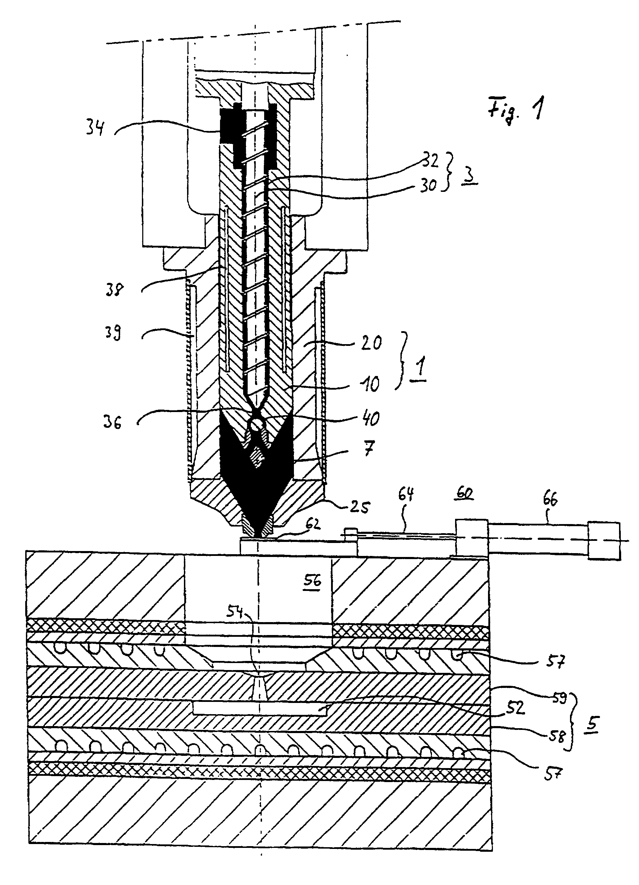

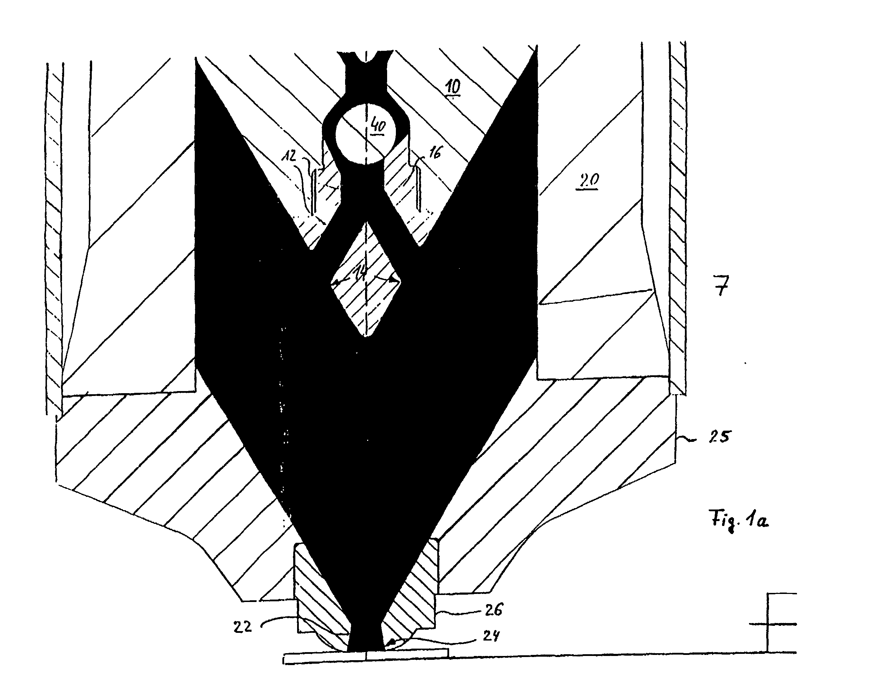

In Fig. 1 und 1a ist die Abgabeöffnung 24 verschlossen, indem die Verschlußplatte 62 an der Außenseite des Mundstückeinsatzes 26 dichtend anliegt. Durch Betätigen des Antriebs für die Extruderschnecke 30 wird Werkstoff 7 über den Extrudereingang 34 zum Extruderausgang 36 und von dort über die Füllkanäle 12 in den Spritzzylinder 20 geleitet. Gleichzeitig wird der Spritzkolben 10 durch den zugehörigen Antrieb und/oder den sich im Spritzzylinder 20 aufbauenden Druck zurückgefahren. Dabei wird in den Spritzzylinder 20 soviel Werkstoff 7 eingefüllt, wie für den folgenden Spritzvorgang benötigt wird.

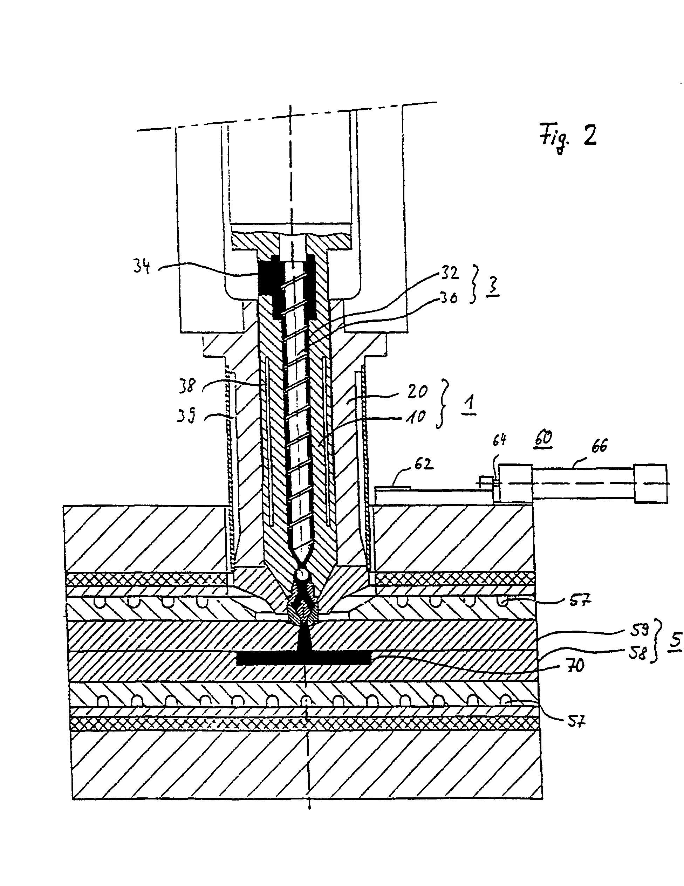

In Fig. 2 und 2a befindet sich der Verschlußschieber 60 in der zurückgezogenen Stellung. Die Injektionseinheit 1 ist in die Ausnehmung 56 im Formwerkzeug 5 eingefahren und mit dem Formwerkzeug 5 gekoppelt. Der Spritzkanal 22 steht mit der Einspritzöffnung 54 in Verbindung. Durch vollständiges Einfahren des Spritzkolbens 10 in den Spritzzylinder 20 ist der Werkstoff vollständig in das Formnest 52 eingepreßt worden. Während des Einfahrens des Spritzzylinders hat das Rückschlagventil 40 den Füllkanal 12 gegen den Extruderausgang 36 abgedichtet. In der vollständig eingefahrenen Stellung des Spritzkolbens liegt das kegelförmige Ende des Spritzkolbens an der kegelförmigen Ausnehmung im Mundstück 25 an. Insbesondere liegt die Spitze des Einsatzes 16 dichtend am Mundstückeinsatz 26 an. Auf diese Weise ist der im Füllkanal 12 vorhandene Werkstoff 7 vollständig getrennt von dem Werkstoff 70, 71 im Spritzkanal 22 bzw. in dem Formnest 52.

In Fig. 2a sind die Temperaturen T₁, T₂ und T₃ angegeben. Die Temperatur T₁ entspricht im wesentlichen der für die Plastifizierung des Werkstoffes geeigneten Temperatur. Vorzugsweise beträgt die Temperatur T₁ 60 bis 90°C, besonders bevorzugt 70 bis 80°C.

Die Temperatur T₃ entspricht im wesentlichen der für die Vulkanisierung des Werkstoffes im Formwerkzeug geeigneten Temperatur. Die Temperatur liegt vorzugsweise im Bereich von 160 bis 180°C. Die Temperatur T₂ liegt zwischen der Temperatur T₁ und der Temperatur T₃. Vorzugsweise beträgt sie etwa 120°C. Die Temperatursteuerung im Bereich des Spritzzylinders und des Spritzkolbens insbesondere im Bereich der Füllkanäle dient zur Einstellung der Temperatur T₁ In dem gezeigten Beispiel weist der Spritzkolben 10 ein Kanalsystem 38 auf, durch das ein Fluid bestimmter Temperatur geleitet wird. Weiterhin weist der Spritzzylinder ein Kanalsystem 39 auf, durch das das gleiche oder ein anderes Fluid mit geeigneter Temperatur geleitet wird. Die Temperatur des Formwerkzeuges T₃ wird mittels einer Heizplatte 57 gesteuert, die jeweils an der Unterseite des unteren Formteils 58 und an der Oberseite des oberen Formteils 59 angeordnet sind. An den Außenflächen der Heizplatten 57 sind jeweils mehrere Platten angeordnet, die unter anderem wärmeisolierende Eigenschaften haben. Dadurch daß einerseits der obere Bereich des Mundstückeinsatzes eine gute wärmeleitende Verbindung zum Mundstück 25 hat und andererseits der untere Bereich des Mundstückeinsatzes 26 frei aus dem Mundstück 25 herausragt, wird erreicht, daß durch entsprechend lange Verweilzeit des unteren Bereiches des Mundstückes 26 auf der Platte 59 (T₃) die im Spritzkanal 22 befindliche Masse genügend vulkanisiert und beim Abheben des Mundstückeinsatzes 26 von der Platte 59 aus dem Spritzkanal gezogen wird. Der Spritzkanal ist somit für den nächsten Spritzvorgang frei. Die Temperatur des unteren Bereichs des Mundstückeinsatzes 26 liegt bei T₂.

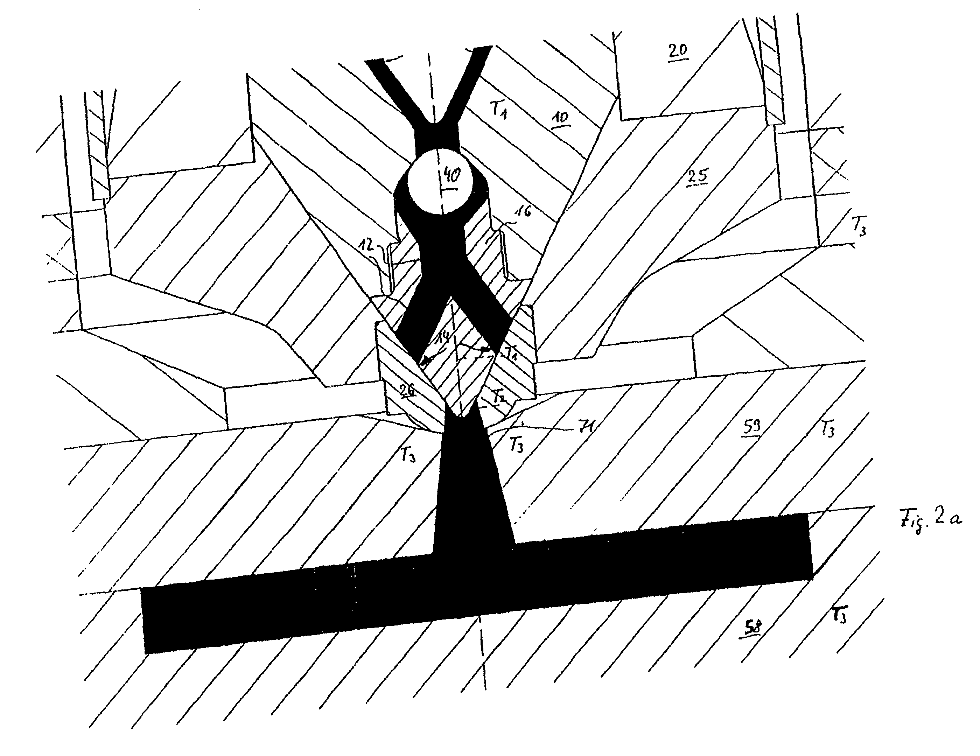

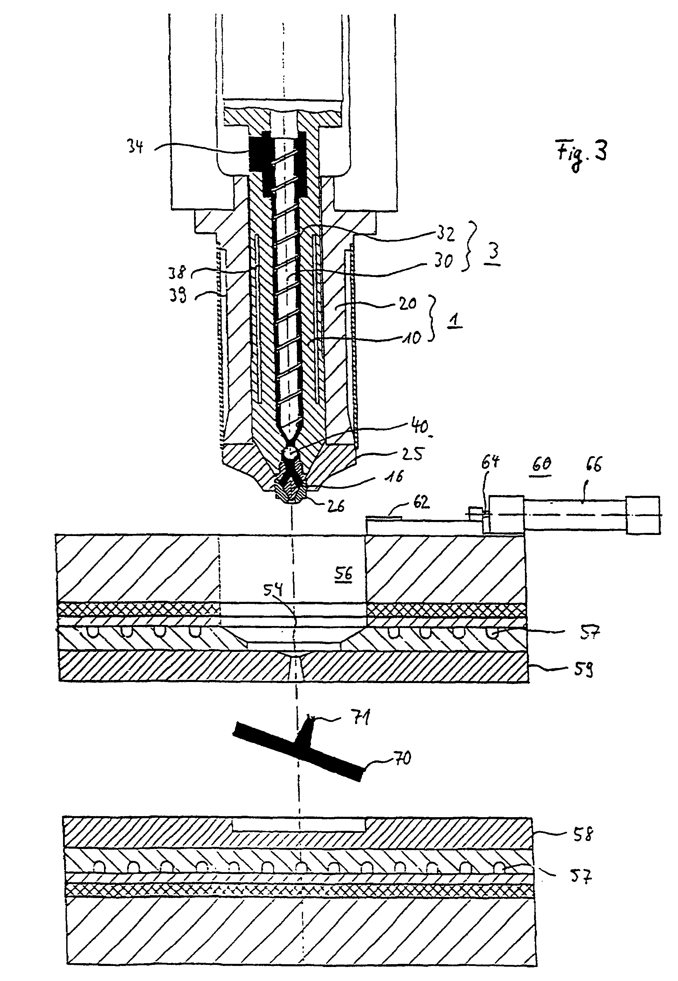

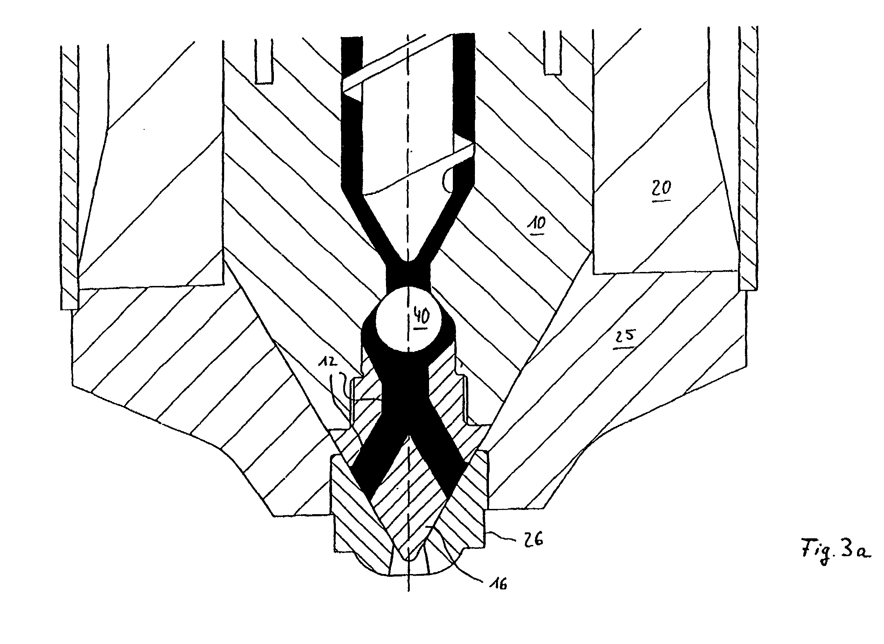

In den Figuren 3 und 3a ist die Injektionseinheit 1 von dem Formwerkzeug 5 entkoppelt und das untere Formteil 58 vom oberen Formteil 59 getrennt und das Formteil 70 aus der Form herausgenommen. An dem Formteil 70 ist das anvulkanisierte Ende 71 erkennbar, das beim Trennen aus dem Spritzkanal 22 bzw. der Abgabeöffnung 24 und der Einspritzöffnung 54 mit herausgezogen worden ist. Der Spritzkanal 22 und die Einspritzöffnung 54 sind frei von Rückständen. Die Spritzgußvorrichtung steht für einen neuen Spritzvorgang zur Verfügung.

Die Erfindung hat insbesondere den Vorteil, daß bei der Kopplung der Injektionseinheit mit dem Formwerkzeug der im Füllkanal vorhandene Werkstoff nicht beeinträchtigt wird. Insbesondere kann ein Anvulkanisieren des Werkstoffs im Füllkanal sicher vermieden werden. Vorzugsweise wird der Werkstoff in der Plastifiziereinheit 3 und in dem Füllkanal 12 auf der Plastifiziertemperatur von etwa 70°C bis 80°C gehalten. Im Formwerkzeug wird der Werkstoff auf die zum Vulkanisieren erforderliche Temperatur von etwa 160 bis 180°C erwärmt. Durch die thermische Trennung der Mündung der Füllkanäle von der Abgabeöffnung wird eine thermische Beeinträchtigung des in den Füllkanälen vorhandenen Werkstoffs vermieden. Vorzugsweise ist der Einsatz 16 aus einem wärmeisolierenden Material hergestellt. Durch die räumliche Trennung wird eine Beeinträchtigung des Werkstoffs in den Füllkanälen durch Temperatur vermieden.

Gemäß einer Weiterbildung der Erfindung ist der Mundstückeinsatz 26 wärmeisolierend ausgeführt. Vorzugsweise besteht der Mundstückeinsatz 26 aus einem wärmeisolierenden Material vorzugsweise CrNi-Stahl wie V2A, V4A oder Keramik aus Sinterwerkstoffen. Alternativ oder zusätzlich weist die Innenfläche des Mundstückeinsatzes 26 eine wärmeisolierende Beschichtung auf.

Der Grundgedanke der vorliegenden Erfindung besteht in der räumlichen und/oder thermischen Trennung des Werkstoffes im Füllkanal 12 und im Spritzkanal 22. Die erfindungsgemäße Spritzgußvorrichtung hat einen einfachen und kompakten Aufbau und ist leicht handhabbar.

## Patentansprüche

1. Spritzgußvorrichtung für Gummi, Kautschuk oder ähnliche Werkstoffe mit einer Injektionseinheit, die einen Spritzzylinder (20) und einen darin verfahrbaren Spritzkolben (10) aufweist, wobei der Spritzkolben (10) sich zu seinem freien Ende verjüngt und eine Spitze (16) aufweist, der Spritzzylinder über einen im Spritzkolben angeordneten Füllkanal befüllbar und über eine Abgabeöffnung (24) im Spritzzylinder entleerbar ist, der Füllkanal (12) mindestens eine Mündung (14) aufweist, die im Abstand von der Spitze (16) angeordnet ist, eine Bodenfläche des Spritzzylinders (20) komplementär zum Spritzkolben (10) ausgebildet ist, wobei die Abgabeöffnung (24) in der Bodenfläche derart ausgebildet ist, daß der Spritzkolben im eingefahrenen Zustand mit der Spitze (16) mindestens teilweise in die Abgabeöffnung hineinragt und die Mündung (14) von der Abgabeöffnung (24) thermisch getrennt ist, wobei eine Einrichtung die Temperatur (T1) im Bereich des Füllkanals so steuert, daß ein Anvulkanisieren des Werkstoffs (7) im Füllkanal vermieden wird.

2. Spritzgußvorrichtung nach Anspruch 1, **dadurch gekennzeichnet, daß** der Spritzkolben (10) und/oder der Spritzzylinder mindestens eine Dichtfläche aufweist, die in der eingefahrenen Stellung des Spritzkolbens (10) die Mündung (14) von der Abgabeöffnung (24) trennt.

3. Spritzgußvorrichtung nach Anspruch 1 oder 2, **dadurch gekennzeichnet, daß** die Mündung (14) des Füllkanals im verjüngten Bereich des Spritzkolbens (10) im Abstand von der Spitze (15) angeordnet ist.

4. Spritzgußvorrichtung nach Anspruch 3, **dadurch gekennzeichnet, daß** das freie Ende des Spritzkolbens kegelförmig und die Mündung des Füllkanals im Bereich der kegelförmigen Mantelfläche im Abstand von der Spitze angeordnet ist, und die Bodenfläche des Spritzzylinders (20) kegelförmig und die Abgabeöffnung (24) im Bereich der Spitze angeordnet ist.

5. Spritzgußvorrichtung nach einem der Ansprüche 1 bis 4, **dadurch gekennzeichnet, daß** an dem freien Ende des Spritzkolbens ein Einsatz (16) angeordnet ist.

6. Spritzgußvorrichtung nach Anspruch 5, **dadurch gekennzeichnet, daß** der Einsatz (16) aus einem wärmeisolierenden Material hergestellt ist.

7. Spritzgußvorrichtung nach einem der Ansprüche 1 bis 6, **dadurch gekennzeichnet, daß** der Spritzzylinder im Bodenbereich ein Mundstück (25) mit einem Mundstückeinsatz (26) mit der Abgabeöffnung (24) aufweist.

8. Spritzgußvorrichtung nach Anspruch 7, **dadurch gekennzeichnet, daß** der Mundstückeinsatz (26) in einem ersten Bereich in guter wärmeleitender Verbindung zum Mundstück (25) steht und in einem anderen Bereich aus dem Mundstück (25) hervorragt.

9. Spritzgußvorrichtung nach einem der Ansprüche 1 bis 8, **dadurch gekennzeichnet, daß** die Temperatur (T₁) im Bereich des Füllkanals (12) für die Plastifizierung des Werkstoffes geeignet ist und vorzugsweise im Bereich von etwa 70 bis 80°C liegt.

10. Spritzgußvorrichtung nach einem der Ansprüche 1 bis 9, **dadurch gekennzeichnet, daß** eine Einrichtung die Temperatur im Bereich der Abgabeöffnung (24) so steuert, daß beim Spritzen in ein Formwerkzeug (5) eingebrachter Werkstoff bis zur Abgabeöffnung anvulkanisiert und somit beim Öffnen der Form das in der Abgabeöffnung befindliche vulkanisierte Material mit dem Anguß aus der Abgabeöffnung gezogen wird.

11. Spritzgußvorrichtung nach einem der Ansprüche 1 bis 10, **dadurch gekennzeichnet, daß** der Mundstückeinsatz (26) aus einem wärmeisolierenden Material hergestellt ist und/oder die Innenfläche des Mundstückeinsatzes (26) eine wärmeisolierende Beschichtung aufweist.

12. Spritzgußvorrichtung nach Anspruch 11, **dadurch gekennzeichnet, daß** der Mundstückeinsatz (26) oder die Beschichtung aus Chrom-Nickel-Stahl wie V2A, V4A oder Keramik hergestellt ist.

13. Spritzgußvorrichtung nach einem der Ansprüche 5 bis 12, **dadurch gekennzeichnet, daß** der Einsatz (16) aus einem Chrom-Nickel-Stahl wie V2A, V4A oder aus Keramik hergestellt ist.

## Claims

1. An injection-moulding device for rubber, caoutchouc or similar materials comprising an injection unit having an injection cylinder (20) and an injection piston (10) travelling therein, wherein the injection piston (10) tapers to its free end and comprises a tip (16), the injection cylinder can be charged via a feed channel arranged in the injection piston and discharged via a discharge opening (24) in the injection cylinder, said feed channel (12) comprises at least one orifice (14) which is spaced apart from the tip 16, a bottom surface of the injection cylinder (20) is formed complementarily to the injection piston (10), wherein the discharge orifice (24) is formed in the bottom surface such that the tip (16) of the inserted injection piston projects at least partially into the discharge opening (24) and the orifice (14) is thermally separated from the discharge opening (24), the temperature (T1) in the area of the feed channel being controlled by means such that vulcanization of the material (7) in the feed channel is prevented.

2. The injection-moulding device according to claim 1, **characterized in that** the injection piston (10) and/or the injection cylinder comprise(s) at least one sealing surface which separates the orifice (14) from the discharge opening (24) when the injection piston (10) is inserted.

3. The injection-moulding device according to claim 1 or 2, **characterized in that** the orifice (14) of the feed channel is arranged in the tapered region of the injection piston (10) and spaced apart from the tip (16).

4. The injection-moulding device according to claim 3, **characterized in that** the free end of the injection piston is conical and the orifice of the feed channel in the conical surface area is spaced apart from the tip and that the bottom surface of the injection cylinder (20) is conical and the discharge opening (24) is arranged near the tip.

5. The injection-moulding device according to any of claims 1 to 4, **characterized in that** an insert (16) is arranged at the free end of the injection piston.

6. The injection-moulding device according to claim 5, **characterized in that** the insert (16) is made of a heat-insulating material.

7. The injection-moulding device according to any of claims 1 to 6, **characterized in that** the injection cylinder comprises a mouth piece (25) in the bottom area, the mouth piece having a mouth-piece insert (26) comprising the discharge opening (24).

8. The injection-moulding device according to claim 7, **characterized in that** the mouth-piece insert (26) is in a good heat-conducting connection with the mouth piece (25) in a first region and projects from the mouth piece (25) in another region.

9. The injection-moulding device according to any of claims 1 to 8, **characterized in that** the temperature (T₁) in the region of the feed channel (12) is suitable for plasticizing the material and is preferably in the range of approximately 70 to 80°C.

10. The injection-moulding device according to any of claims 1 to 9, **characterized in that** means control the temperature near the discharge opening (24) such that the material which is introduced into a mould (5) during injection is vulcanized up to the discharge opening and thus the vulcanized material in the discharge opening (24) is drawn from the discharge opening together with the sprue when the mould is opened.

11. The injection-moulding device according to any of claims 1 to 10, **characterized in that** the mouth-piece insert (26) is made of a heat-insulating material and/or the inner surface of the mouth-piece insert (26) comprises a heat-insulating coating.

12. The injection-moulding device according to claim 11, **characterized in that** the mouth-piece insert (26) or the coating is made of chromium-nickel steel, such as V2A, V4A, or ceramics.

13. The injection-moulding device according to any of claims 5 to 12, **characterized in that** the insert (16) is made of chromium-nickel steel, such as V2A, V4A, or ceramics.

## Revendications

1. Dispositif de moulage par injection, pour la gomme, le caoutchouc ou d'autres matières analogues, avec une unité d'injection, qui présente un vérin d'injection (20) et un piston d'injection (10) déplaçable dans ce dernier, le piston d'injection se rétrécissant en une extrémité libre et présentant une pointe (16), le vérin d'injection pouvant être rempli par l'intermédiaire d'un conduit de remplissage disposé dans le vérin d'injection et pouvant être vidé par l'intermédiaire d'un orifice de distribution (24) dans le vérin d'injection, le conduit de remplissage présentant au moins une bouche (14), disposée à distance de la pointe (16), une surface du fond du vérin d'injection (20) étant conçue de manière complémentaire au piston d'injection (10), l'orifice de distribution (24) dans le fond étant conçu de manière à ce que le piston d'injection, à l'état rentré, pénètre au moins partiellement avec sa pointe (16) dans l'orifice de distribution et la bouche (14) étant thermiquement séparée de l'orifice de distribution (24), un système régulant la température (T1) dans la région du conduit de remplissage de manière à éviter que la matière (7) ne commence à vulcaniser dans le conduit de remplissage.

2. Dispositif de moulage par injection selon la revendication 1, **caractérisé en ce que** le piston d'injection (10) et/ou le vérin d'injection présente au moins une surface d'étanchéité qui, en position rentrée du piston d'injection (10), sépare la bouche (14) de l'orifice de distribution (24).

3. Dispositif de moulage par injection selon l'une quelconque des revendications 1 ou 2, **caractérisé en ce que** la bouche (14) du conduit de remplissage est disposée dans la région rétrécie du piston d'injection (10), à distance de la pointe (16).

4. Dispositif de moulage par injection selon la revendication 3, **caractérisé en ce que** l'extrémité libre du piston d'injection est conique et la bouche du conduit de remplissage est disposée dans la région de la surface conique, à distance de la pointe et la surface du fond du vérin d'injection (20) est conique et l'orifice de distribution (24) est disposé dans la région de la pointe.

5. Dispositif de moulage par injection selon l'une quelconque des revendications 1 à 4, **caractérisé en ce qu'**un embout (16) est disposé sur l'extrémité libre du piston d'injection.

6. Dispositif de moulage par injection selon la revendication 5, **caractérisé en ce que** l'embout (16) est fabriqué dans une matière isolante thermique.

7. Dispositif de moulage par injection selon l'une quelconque des revendications 1 à 6, **caractérisé en ce que**, dans la zone de son fond, le vérin d'injection présente un bec (25) avec un embout (26) avec l'orifice de distribution (24).

8. Dispositif de moulage par injection selon la revendication 7, **caractérisé en ce que** dans une première région, l'embout du bec (26) est en bonne liaison conductrice de chaleur avec le bec (25) et dans une autre région, il saillit du bec (25).

9. Dispositif de moulage par injection selon l'une quelconque des revendications 1 à 8, **caractérisé en ce que** dans la région du conduit de remplissage (12), la température (T1) est adaptée pour la plastification de la matière et se situe de préférence entre 70 et 80° C.

10. Dispositif de moulage par injection selon l'une quelconque des revendications 1 à 9, **caractérisé en ce que** dans la région de l'orifice de distribution (24), un système régule la température de manière à ce que la matière introduite dans un outil de formage (5) lors de l'injection commence à vulcaniser jusqu'à l'orifice de distribution et à l'ouverture du moule, la matière vulcanisée qui se trouve dans l'orifice de distribution est tirée hors de l'orifice de distribution, avec le culot d'injection.

11. Dispositif de moulage par injection selon l'une quelconque des revendications 1 à 10, **caractérisé en ce que** l'embout du bec (26) est fabriqué dans une matière isolante thermique et/ou la face interne de l'embout du bec (26) présente un revêtement isolant thermique.

12. Dispositif de moulage par injection selon la revendication 11, **caractérisé en ce que** l'embout du bec (26) ou le revêtement est fabriqué en acier-chrome-nickel comme V2A, V4A ou en céramique.

13. Dispositif de moulage par injection selon l'une quelconque des revendications 5 à 12, **caractérisé en ce que** l'embout (16) est fabriqué en acier-chrome-nickel comme V2A, V4A ou en céramique.
